# EUROPÄISCHE PATENTSCHRIFT

(11) **EP 3 771 601 B1**
(45) Veröffentlichungstag und Bekanntmachung des Hinweises auf die Patenterteilung: **08.03.2023**
(21) Anmeldenummer: 20169557.4
(22) Anmeldetag: 15.04.2020
(51) Int. Cl.: B60T 7/20, B60T 8/17, B60T 8/32

(54) **VERFAHREN ZUM BETREIBEN EINES BREMSSYSTEMS EINES LANDWIRTSCHAFTLICHEN ZUGES**
METHOD FOR OPERATING A BRAKE SYSTEM OF AN AGRICULTURAL TRAIN
PROCÉDÉ DE FONCTIONNEMENT D'UN SYSTÈME DE FREINAGE D'UN TRAIN AGRICOLE

(30) Priorität: 02.08.2019 DE 102019120958
(43) Veröffentlichungstag der Anmeldung: 03.02.2021
(73) Patentinhaber: CLAAS Tractor S.A.S., 78141 Vélizy-Villacoublay Cedex (FR)
(72) Erfinder: Roger, Fabien, 75019 Paris (FR)
(74) Vertreter: CLAAS Gruppe

(56) Entgegenhaltungen:
- EP-A1- 3 009 312
- DE-A1-102017 011 802
- DE-C1- 4 429 231

## Beschreibung

Die vorliegende Erfindung betrifft ein Verfahren zum Betreiben eines Bremssystems eines landwirtschaftlichen Zuges gemäß dem Oberbegriff des Anspruches 1. Ein solches Verfahren ist aus EP 3009312 A1 bekannt.

Weiterhin betrifft die vorliegende Erfindung ein Bremssystem eines landwirtschaftlichen Zuges gemäß dem Oberbegriff des Anspruches 11 sowie einen landwirtschaftlichen Zug gemäß dem Oberbegriff des Anspruches 13.

Landwirtschaftliche Arbeitsmaschinen wie Traktoren werden neben der reinen Feldarbeit auch oft für Transportaufgaben eingesetzt, bei denen beispielsweise auf einen Anhänger verladenes Erntegut transportiert wird. Dabei werden üblicherweise ein oder mehrere Anhänger von einem Zugfahrzeug gezogen und bilden zusammen mit dem Zugfahrzeug einen sogenannten landwirtschaftlichen Zug. Mit der zunehmenden Größe und Leistungsfähigkeit der landwirtschaftlichen Arbeitsmaschinen steigt auch die Möglichkeit, größere und schwerer beladene Anhänger zu ziehen, wobei die zulässigen Höchstgeschwindigkeiten, die landwirtschaftliche Arbeitsmaschinen im öffentlichen Straßenverkehr fahren dürfen, ebenfalls ansteigen. Das Betreiben der Bremsvorrichtung der Arbeitsmaschine und des zumindest einen gezogenen Anhängers erfolgt jeweils kennlinienbasiert. Hierzu werden sogenannte Kompatibilitätsbänder vorgegeben, die charakteristisch für einen Betrieb des Zuges im unbeladenen und beladenen Zustand sind. Die Kompatibilitätsbänder legen ein Verhältnis zwischen der Verzögerung und der Bremskraft des Anhängers fest. Die Grenzen der jeweiligen Kompatibilitätsbänder werden in Abhängigkeit von einer minimalen und einer maximalen theoretischen Masse der Arbeitsmaschine und des Anhängers, d.h. unbeladen oder beladen, bestimmt. Durch die Bremsvorrichtung der landwirtschaftlichen Arbeitsmaschine wird sichergestellt, dass sich das Bremsverhalten des Zuges innerhalb des jeweiligen Kompatibilitätsbändes bewegt. Das tatsächliche Bremsverhalten wird dabei von der tatsächlichen Masse der landwirtschaftlichen Arbeitsmaschine beeinflusst, welche bei der Festlegung der Kompatibilitätsbänder unberücksichtigt bleibt. So kann die Masse der landwirtschaftlichen Arbeitsmaschine durch eine erforderliche Ballastierung variieren. Entsprechend kann es im Betrieb eines beladenen Zuges zu einer Situation kommen, in der die Verzögerung des Anhängers gemäß der innerhalb des Kompatibilitätsbändes liegenden Kennlinie geringer ist als die der Arbeitsmaschine, wodurch beim Bremsen des Zuges ein unerwünschter, unter Umständen kritischer, Schubbetrieb auftreten kann.

Aus der DE 195 19 768 C2 ist ein Verfahren zum Einstellen der Bremskraft eines Arbeitsgeräts eines aus einer landwirtschaftlichen Arbeitsmaschine und mindestens einem Anhänger bestehenden Zuges bekannt. Dabei erfolgt die Einstellung der Bremskraft des Anhängers in Abhängigkeit von der Achslast, die wiederum von der Masse des Anhängers abhängig ist. Die Achslast ist im Betrieb veränderlich und oftmals nur schwierig zu ermitteln

Aus der DE 10 2013 007 881 A1 ist ein Verfahren zur Abbremsung einer Zugfahrzeug-Arbeitsgerätkombination, bei welchem für eine Bremsanlage des Zugfahrzeugs eine Bremsschlupfregelung und für eine Bremsanlage des Anhängers keine Bremsschlupfregelung oder eine Bremsschlupfregelung für die vorhandenen Achsen, aber mit einer Bremsschlupfermittlung an weniger als den vorhandenen Achsen vorgesehen wird, wobei die Bremsanlage des Anhängers von der Bremsanlage des Zugfahrzeugs gesteuert wird. Bei einem Bremsvorgang wird ermittelt wird, ob ein Ausschwingen des Anhängers gegenüber dem Zugfahrzeug droht, bevorsteht oder vorliegt. Die Bremskraft des Anhängers oder die Abbremsung des Anhängers wird abgesenkt wird, wenn ermittelt wurde, dass ein Ausschwingen des Anhängers droht, bevorsteht oder vorliegt. Ein drohendes, bevorstehendes oder vorliegendes Ausschwingen des Anhängers gegenüber dem Zugfahrzeug gemäß wird dabei durch ein Ansprechen der Bremsschlupfregelung des Zugfahrzeugs festgestellt. Die Absenkung der Bremskraft oder der Abbremsung des Anhängers erfolgt dabei durch Absenken einer zulässigen Schlupfgrenze der Bremsdruckregelung des Zugfahrzeugs.

Ausgehend vom vorstehend genannten Stand der Technik liegt der Erfindung die Aufgabe zugrunde, ein Verfahren zum Betreiben eines Bremssystems eines landwirtschaftlichen Zuges sowie ein Bremssystem eines landwirtschaftlichen Zuges derart fortzubilden, dass ein Auftreten eines unerwünschten Schubbetriebes des landwirtschaftlichen Zuges durch eine verbesserte Ansteuerung des Bremssystems vermieden werden kann.

Diese Aufgabe wird erfindungsgemäß durch die Merkmale der unabhängigen Ansprüche 1 und 11 gelöst. Weiterhin wird die Aufgabe durch einen landwirtschaftlicher Zug mit den Merkmalen des Anspruches 13 gelöst. Vorteilhafte Weiterbildungen sind Gegenstand der Unteransprüche.

Gemäß dem Anspruch 1 wird ein Verfahren zum Betreiben eines Bremssystems eines landwirtschaftlichen Zuges vorgeschlagen, der eine landwirtschaftliche Arbeitsmaschine sowie zumindest ein von dieser gezogenes Arbeitsgerät umfasst, wobei die Arbeitsmaschine und das zumindest eine Arbeitsgerät jeweils zumindest ein Bodeneingriffsmittel umfassen, durch welche eine von jeweils einer Bremsvorrichtung der Arbeitsmaschine und des zumindest einen Arbeitsgeräts erzeugte Bremskraft übertragen wird. Dabei wird bei einer Aktivierung des Bremssystems des Zuges eine Ist-Verzögerung der Arbeitsmaschine in Abhängigkeit von einer durch die Bremsvorrichtung der Arbeitsmaschine erzeugten Bremskraft bestimmt. Die Ist-Verzögerung wird mit einer der von der Bremsvorrichtung der Arbeitsmaschine erzeugten Bremskraft entsprechenden theoretischen Soll-Verzögerung der Arbeitsmaschine verglichen und eine Abweichung zwischen der Soll-Verzögerung und der Ist-Verzögerung der Arbeitsmaschine wird durch eine Anpassung der von der Bremsvorrichtung des mindestens einen Arbeitsgeräts erzeugten Bremskraft ausgeglichen. Durch das erfindungsgemäße Verfahren kann eine sichere Bremswirkung des landwirtschaftlichen Zuges unter verschiedenen Betriebsbedingungen gewährleistet und insbesondere das Auftreten eines kritischen Schubbetriebes vermeiden werden. So werden unterschiedliche automatisch Beladungszustände des zumindest einen Arbeitsgeräts ebenso berücksichtigt, wie eine Änderung der Masse der landwirtschaftlichen Arbeitsmaschine durch Vornahme oder Wegfall einer Ballastierung.

Ebenfalls kann eine Neigung einer von dem landwirtschaftlichen Zug befahrenen Straße automatisch berücksichtigt werden. Das Arbeitsgerät kann insbesondere als Anhänger ausgeführt sein.

Insbesondere kann die Anpassung der von der Bremsvorrichtung des mindestens einen Arbeitsgeräts erzeugten Bremskraft iterativ durchgeführt werden. Hierdurch kann eine schnelle und präzise Annäherung an die Soll-Verzögerung der Arbeitsmaschine erreicht werden. Dazu kann mit der Aktivierung des Bremssystems innerhalb eines Zeitintervalls zu unterschiedlichen Messzeitpunkten wiederholt die von der Bremsvorrichtung der Arbeitsmaschine erzeugte Bremskraft bestimmt werden, um die jeweilige Ist-Verzögerung zum Messzeitpunkt zu bestimmen.

Dabei kann zur Bestimmung der erzeugten Bremskraft ein von der Bremsvorrichtung der Arbeitsmaschine erzeugter Bremsdruck sensorisch erfasst werden. Beispielsweise kann zumindest in einer Verbindungsleitung, über die Bremsfluid zu der Bremsvorrichtung geleitet wird, ein Drucksensor zur Ermittlung des hydraulischen Bremsfluiddrucks angeordnet sein. Es kann zweckmäßig sein, zusätzlich unmittelbar an der Bremsvorrichtung einen weiteren Drucksensor anzuordnen, über den der Bremsfluiddruck in der Bremsvorrichtung ermittelbar ist. Eine sensorische Überwachung des von der Bremsvorrichtung des zumindest einen Arbeitsgeräts erzeugten Bremsdrucks kann ebenfalls durchgeführt werden. Hierdurch kann ein Überschreiten des zulässigen Bremsdrucks an der Bremsvorrichtung des zumindest einen Arbeitsgeräts vermieden werden.

Alternativ oder zusätzlich kann zur Bestimmung der von der Bremsvorrichtung der Arbeitsmaschine erzeugten Bremskraft eine Pedalstellung eines Bremspedals oder eine auf das Bremspedal ausgeübte Betätigungskraft sensorisch erfasst werden. Mittels des Zusammenhangs zwischen der auf das Bremspedal von einer Bedienperson der Arbeitsmaschine ausgeübten Betätigungskraft und dem daraus resultierenden Bremsdruck lässt sich die Bremskraft bestimmen. Entsprechendes gilt für den Zusammenhang zwischen der Pedalstellung des Bremspedals und des daraus resultierenden Bremsdrucks.

Weiterhin kann die Ist-Verzögerung in Abhängigkeit vom Verlauf der Fahrgeschwindigkeit während des Bremsvorgangs bestimmt werden.

Des Weiteren kann die Ist-Verzögerung anhand einer durch die Auswertung von Positionsortungssignalen bestimmten Beschleunigung während des Bremsvorganges bestimmt werden.

Bevorzugt kann die Ist-Verzögerung während des Bremsvorganges mittels zumindest eines an der Arbeitsmaschine angeordneten Beschleunigungssensors bestimmt werden. Oftmals weist das Getriebe respektive das Getriebesteuergerät der Arbeitsmaschine einen Beschleunigungssensor auf, der unter anderem der Bestimmung einer Neigung dient.

Insbesondere kann die Ist-Verzögerung anhand von während des Bremsvorganges auftretenden Kräften an einer die Arbeitsmaschine und das Arbeitsgerät verbindenden Kupplungsvorrichtung bestimmt werden. Entsprechend dem Verzögerungsverhalten des zumindest einen Arbeitsgeräts nach der Aktivierung des Bremssystems treten an der Kupplungsvorrichtung Zug- oder Druckkräfte auf, die durch einen Kraftsensor erfasst werden können.

Weiterhin kann die Ist-Verzögerung durch einen Vergleich von Eingangsdrehzahl und Ausgangsdrehzahl eines Getriebes bestimmt werden.

Gemäß einer bevorzugten Weiterbildung kann bei einem Überschreiten eines vorgebbaren Grenzwertes für die Abweichung zwischen der Soll-Verzögerung und der Ist-Verzögerung ein Hinweissignal generiert werden. Das Überschreiten des vorgebbaren Grenzwertes der Abweichung zwischen der Soll-Verzögerung und der Ist-Verzögerung kann als Indiz für eine Überladung des Zuges oder den Verschleiß der Bremsvorrichtungen des Zuges gewertet und entsprechend signalisiert werden.

Bei dem erfindungsgemäßen Bremssystem des landwirtschaftlichen Zuges ist dem Bremssystem eine Steuer- und Regelvorrichtung zugeordnet ist, welche dazu eingerichtet ist, bei einer Aktivierung des Bremssystems des Zuges in Abhängigkeit von einer durch die Bremsvorrichtung der Arbeitsmaschine erzeugten Bremskraft eine Ist-Verzögerung der Arbeitsmaschine zu bestimmen, die bestimmte Ist-Verzögerung mit einer der von der Bremsvorrichtung der Arbeitsmaschine erzeugten Bremskraft entsprechenden Soll-Verzögerung der Arbeitsmaschine zu vergleichen, und eine Abweichung zwischen der Soll-Verzögerung und der Ist-Verzögerung der Arbeitsmaschine durch eine Anpassung der von der Bremsvorrichtung des mindestens einen Arbeitsgeräts erzeugten Bremskraft auszugleichen.

Die Bremsvorrichtung der Arbeitsmaschine kann insbesondere hydraulisch und die Bremsvorrichtung des zumindest einen Arbeitsgeräts kann hydraulisch oder pneumatisch arbeiten.

Weiterhin wird die eingangs gestellte Aufgabe durch einen landwirtschaftlichen Zug gelöst, der eine landwirtschaftliche Arbeitsmaschine sowie zumindest einen von der Arbeitsmaschine gezogenen Arbeitsgerät umfasst, wobei der Zug ein Bremssystem nach Anspruch 11 oder 12 aufweist.

Bevorzugt kann der Zug eine Steuer- und Regelvorrichtung sowie zumindest einen Sensor umfassen, wobei die Steuer- und Regelvorrichtung zur Auswertung der Signale des zumindest einen Sensors eingerichtet ist, um das Bremssystem des Zuges nach einem der Ansprüche 2 bis 10 zu betreiben. Insbesondere ist die Steuer- und Regelvorrichtung an der landwirtschaftlichen Arbeitsmaschine angeordnet. Insbesondere die Bestimmung der Ist-Verzögerung mittels eines oder mehrerer an der landwirtschaftlichen Arbeitsmaschine bereits vorhandener Sensoren, wie einem Drucksensor zur Bremsdruckbestimmung, einem GPS-Sensor, Drehzahlsensoren vereinfachen die Realisierung an einer Arbeitsmaschine. Die Umsetzung wird dadurch auch kostengünstiger.

Die vorliegende Erfindung wird nachstehend anhand eines in den Zeichnungen dargestellten Ausführungsbeispieles näher erläutert.

Es zeigen:
- Fig. 1: schematisch eine Ansicht eines landwirtschaftlichen Zuges;
- Fig. 2: ein Verzögerungs-Bremsdruck-Diagramm einer Arbeitsmaschine des Zuges;
- Fig. 3: Kompatibilitätsbänder der Arbeitsmaschine und eines Arbeitsgerätes in einem gemeinsamen Verzögerungs-Steuerdruck-Diagramm;
- Fig. 4: eine Bremsdruckkennlinie eines Arbeitsgerätes des Zuges;
- Fig. 5: ein Verzögerungs-Steuerdruck-Diagramm des Zuges; und
- Fig. 6: ein vereinfachtes Flussdiagramm zur Veranschaulichung des Verfahrens zum Betreiben eines Bremssystems des Zuges.

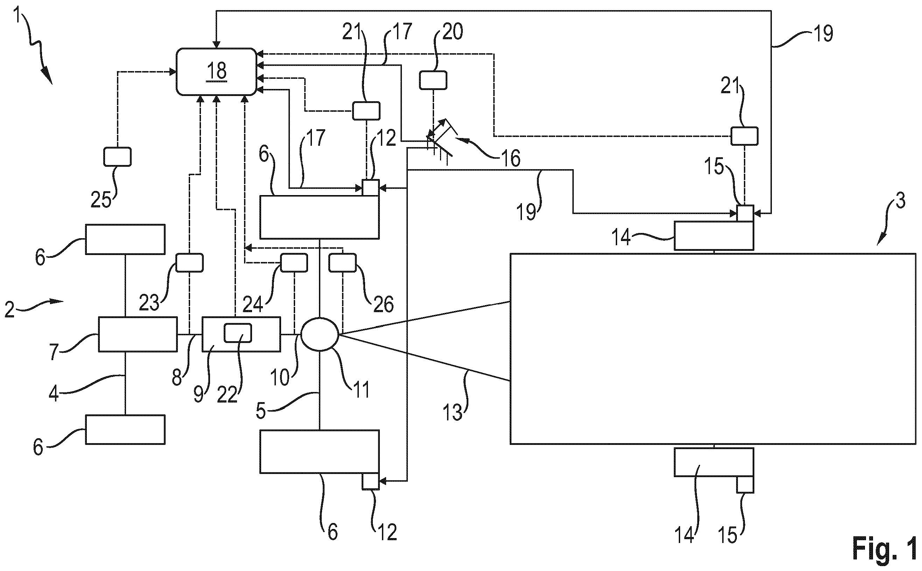

Die Darstellung in Fig. 1 zeigt schematisch eine Ansicht eines landwirtschaftlichen Zuges 1. Der Zug umfasst eine landwirtschaftliche Arbeitsmaschine 2 sowie zumindest ein Arbeitsgerät 3. Das Arbeitsgerät 3 kann insbesondere als ein- oder mehrachsiger Anhänger ausgeführt sein.

Die landwirtschaftliche Arbeitsmaschine 2 umfasst eine Vorderachse 4 sowie eine Hinterachse 5, an denen Bodeneingriffsmittel 6 angeordnet sind. Die Bodeneingriffsmittel 6 können als Räder ausgeführt sein. Ein Antriebsstrang der Arbeitsmaschine 2 weist einen Antriebsmotor 7 auf, der durch eine Eingangswelle 8 mit einem Getriebe 9 trieblich verbunden ist. Das Getriebe 9 steht mittels einer Ausgangswelle 10 mit einem an der Hinterachse 5 angeordneten Differential 11 trieblich in Verbindung. Die an der Hinterachse 5 angeordneten Bodeneingriffsmittel 6 weisen eine Bremsvorrichtung 12 auf. Die Bremsvorrichtung 12 kann als hydraulisch betätigte Radbremse ausgeführt sein.

Die landwirtschaftliche Arbeitsmaschine 2 und das Arbeitsgerät 3 sind durch eine mechanische Kupplungsvorrichtung 13 miteinander verbunden. Das Arbeitsgerät 3 weist an einer Achse angeordnete Bodeneingriffsmittel 14 auf. Die Bodeneingriffsmittel 14 weisen eine Bremsvorrichtung 15 auf. Die Bremsvorrichtung 15 kann als pneumatisch oder hydraulisch betätigte Radbremse ausgeführt sein.

Die Bremsvorrichtung 12 der Arbeitsmaschine 2 und die Bremsvorrichtung 15 des zumindest einen Arbeitsgerätes 3 sind Teil eines Bremssystems des Zuges 1. Die Aktivierung des Bremssystems erfolgt durch die Betätigung eines Bremspedals 16 der Arbeitsmaschine 2. Das Bremspedal 16 ist durch eine Kommunikationsverbindung 17 mit einer Steuer- und Regelvorrichtung 18 der Arbeitsmaschine 2 verbunden, die dem Bremssystem zugeordnet ist. Das Bremspedal 16 sowie die Steuerund Regelvorrichtung 18 sind durch zumindest eine Steuerleitung 19 mit den Bremsvorrichtungen 15 verbunden, um diese anzusteuern.

Die Stellung und/oder die Betätigungskraft des Bremspedals 16 wird durch einen entsprechenden Sensor 20 erfasst und das erfasste Signal wird über das Bussystem 17 an die Steuer- und Regelvorrichtung 18 zur Auswertung übertragen. Der Bremsvorrichtung 12 sowie der Bremsvorrichtung 15 sind Drucksensoren 21 zugeordnet, welche den Bremsdruck erfassen. Die Signale der Drucksensoren 21 werden an die Steuer- und Regelvorrichtung 18 zur Auswertung übertragen. Die Übertragung der Signale kann durch das Bussystem 17 oder die Steuerleitung 19 erfolgen. Das Getriebe 9 weist ein Getriebesteuergerät auf, in welchem ein Beschleunigungssensor 22 angeordnet ist. An der Eingangswelle 8 und der Ausgangswelle 10 sind jeweils Drehzahlsensoren 23, 24 angeordnet. Mittels der Drehzahlsensoren 23, 24 lassen sich die Eingangsdrehzahl und die Ausgangsdrehzahl am Getriebe 9 bestimmen. Die Drehzahlsensoren 23, 24 übertragen entsprechende Signale an die Steuer- und Regelvorrichtung 18 zur Auswertung.

Weiterhin kann an der Arbeitsmaschine 2 ein Positionsortungssensor 25 angeordnet sein, dessen Signale an die Steuer- und Regelvorrichtung 18 zur Auswertung übertragen werden. An der Kupplungsvorrichtung 13 kann ein Kraftaufnehmer 26 angeordnet sein, der zur Messung von Zug- und Druckkräften eingerichtet ist. Signale des Kraftaufnehmers 26 werden an die Steuer- und Regelvorrichtung 18 zur Auswertung übertragen.

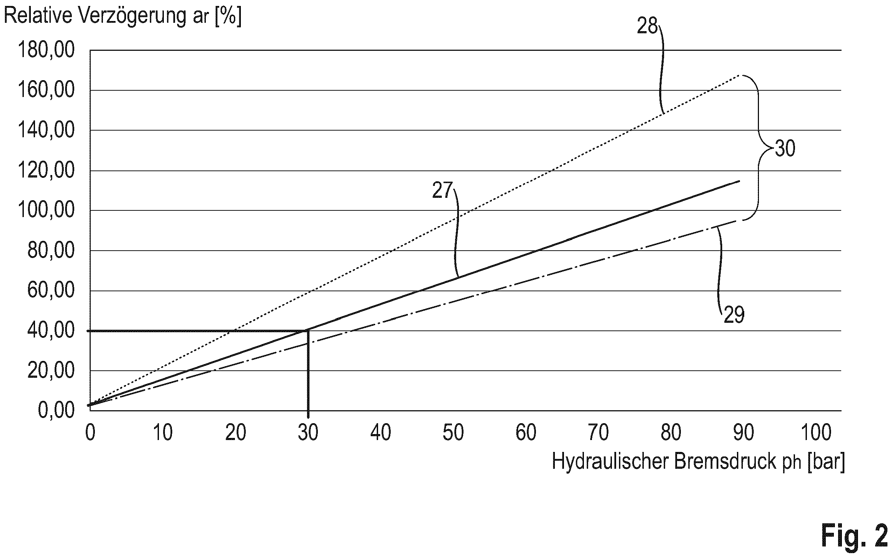

Fig. 2 zeigt ein exemplarisches Verzögerungs-Bremsdruck-Diagramm der Arbeitsmaschine 2 des Zuges 1. Darin ist ein Verlauf 27 einer relativen Verzögerung aᵣ der Arbeitsmaschine 2 über eine hydraulischen Bremsdruck pₕ dargestellt. Mit Bezugszeichen 28 ist eine obere Grenze und mit Bezugszeichen 29 eine untere Grenze eines Kompatibilitätsbandes 30 bezeichnet. Dabei beschreibt die obere Grenze 28 den Verlauf für einen Zug 1 im unbeladenen Zustand bei einer minimalen theoretischen Masse der Arbeitsmaschine 2. Die untere Grenze 29 beschreibt den Verlauf für einen Zug 1 im beladenen Zustand bei einer maximalen theoretischen Masse der Arbeitsmaschine 2. Innerhalb dieses Kompatibilitätsbandes 30 muss sich der Verlauf 27 der relativen Verzögerung aᵣ der Arbeitsmaschine 2 befinden, um gesetzliche Vorgaben zu erfüllen. So stellt sich bei einer Aktivierung des Bremssystems beispielsweise bei einem hydraulischen Bremsdruck pₕ von 30 bar eine relative Verzögerung aᵣ von 40 % ein.

Entsprechende gesetzliche Vorgaben gibt es für das Arbeitsgerät 3, dessen Bremsvorrichtung 15 einen Verlauf 27 einer relativen Verzögerung aᵣ aufweisen muss, der sich ebenfalls in einem für das Arbeitsgerät 3 spezifischem Kompatibilitätsband 40 befinden muss.

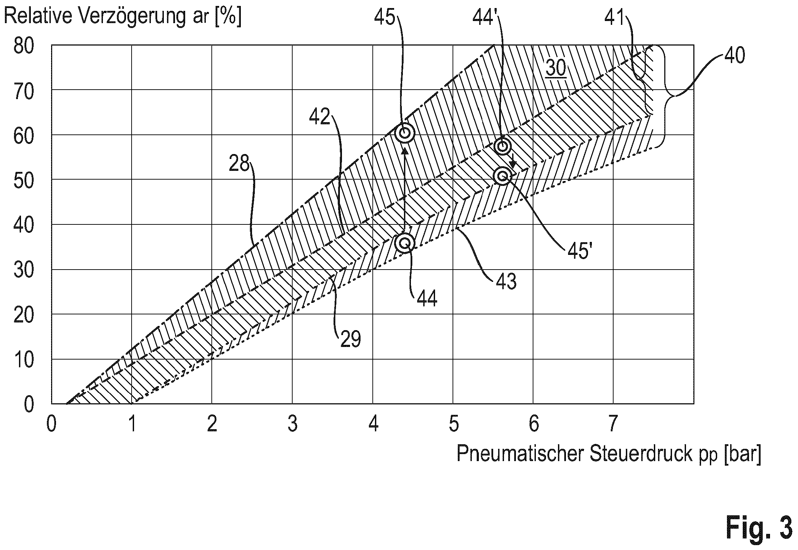

Fig. 3 zeigt die Kompatibilitätsbänder 30 und 40 der Arbeitsmaschine 2 und des Arbeitsgerätes 3 in einem gemeinsamen Verzögerungs-Steuerdruck-Diagramm. Wie aus der Darstellung ersichtlich weisen das Kompatibilitätsband 30 der Arbeitsmaschine 2 und das Kompatibilitätsband 40 des Arbeitsgerätes 3 einen sich überlappenden Bereich 41. Das Bremssystem des Zuges 1 muss innerhalb dieses sich überlappenden Bereiches 41 betrieben werden, um die gesetzlichen Anforderungen zur erfüllen. Mit Bezugszeichen 42 ist eine obere Grenze und mit Bezugszeichen 43 eine untere Grenze des Kompatibilitätsbandes 40 bezeichnet. Dabei beschreibt die obere Grenze 42 den Verlauf für das Arbeitsgerät 3 im unbeladenen Zustand. Die untere Grenze 43 beschreibt den Verlauf für das Arbeitsgerät 3 im beladenen Zustand. Mit Bezugszeichen 44 ist ein Arbeitspunkt der Bremsvorrichtung 15 des Arbeitsgerätes 3 im beladenen Zustand bezeichnet, der an der unteren Grenze 43 des Kompatibilitätsbandes 40 liegt. Mit Bezugszeichen 45 ist ein Arbeitspunkt der Bremsvorrichtung 12 der Arbeitsmaschine 2 im unbeladenen Zustand bezeichnet, der an der oberen Grenze 28 des Kompatibilitätsbandes 30 liegt. Der bei einem Betrieb des Bremssystems des Zuges 1 auftretende Effekt besteht in einem unerwünschten Schubbetrieb. Das erfindungsgemäße Verfahren, welches weiter unten näher erläutert wird, sieht eine Anpassung der von der Bremsvorrichtung 12 des Arbeitsgerätes 3 erzeugten Bremskraft an die Bremskraft der Arbeitsmaschine 2 vor. Dies bewirkt, dass sich ein Arbeitspunkt 44' der Bremsvorrichtung 15 und ein Arbeitspunkt 45' der Bremsvorrichtung 12 einstellen, die innerhalb des Bereiches 41 liegen, wobei die relativen Verzögerung aᵣ des Arbeitsgerätes 3 größer als die der Arbeitsmaschine 2 ist. Dadurch wird ein unerwünschter Schubbetrieb vermieden.

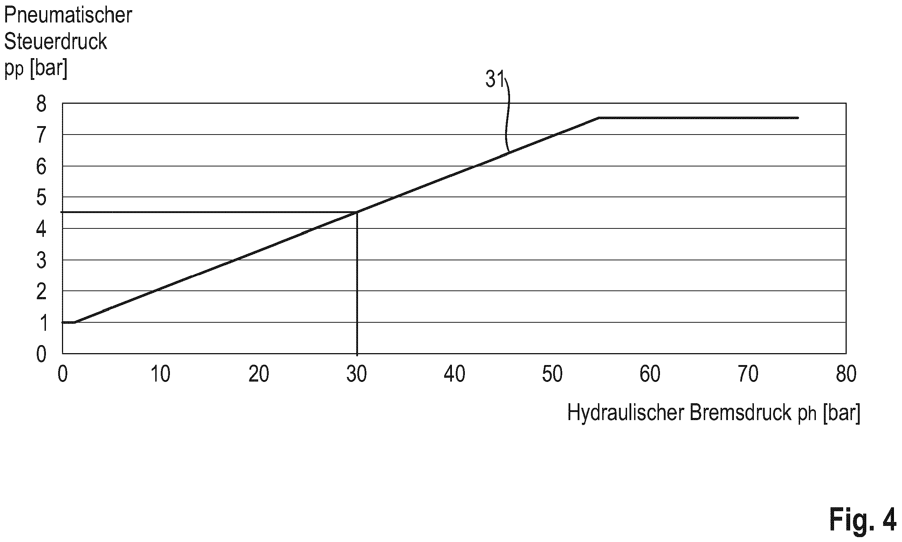

Fig. 4 zeigt eine exemplarische Bremsdruckkennlinie 31 des Arbeitsgerätes 3 des Zuges 1. Bei einer Aktivierung des Bremssystems wird der hydraulische Bremsdruck pₕ zur Ansteuerung der Bremsvorrichtung 15 des Arbeitsgerätes 3 verwendet. Beispielhaft ausgehend von einem hydraulischen Bremsdruck pₕ von 30 bar, mit dem die hydraulisch betätigte Bremsvorrichtung 12 an der Arbeitsmaschine 2 beaufschlagt wird, erfolgt die Ansteuerung der pneumatisch betätigten Bremsvorrichtung 15 des Arbeitsgerätes mit einem pneumatischen Steuerdruck pₚ von 4,5 bar.

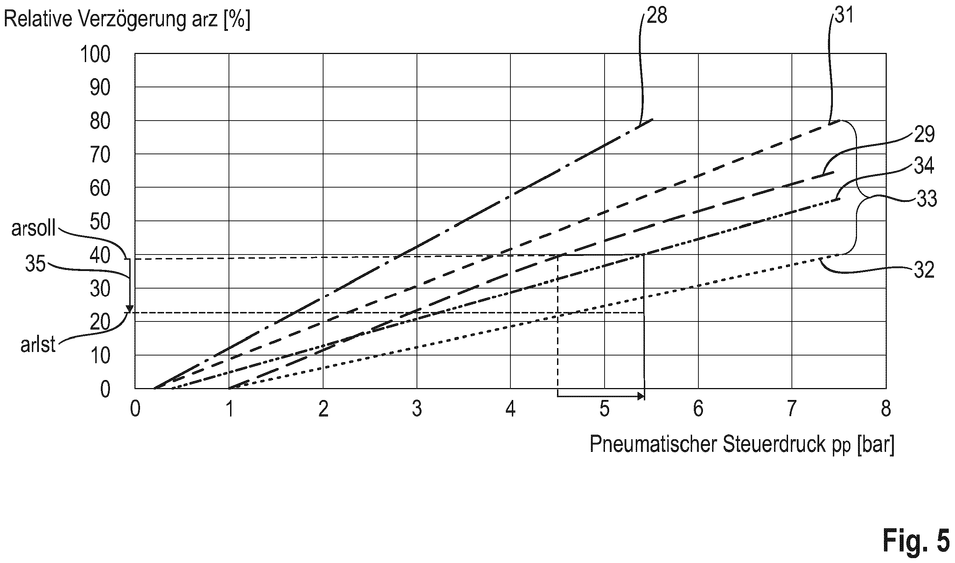

Fig. 5 zeigt exemplarisch ein Verzögerungs-Steuerdruck-Diagramm des Zuges 1. Darin ist eine relative Verzögerung a_{rZ} des Zuges 1 über den pneumatischen Steuerdruck pₚ der Bremsvorrichtung 15 des Arbeitsgerätes aufgetragen. Mit Bezugszeichen 31 ist eine obere Grenze und mit Bezugszeichen 32 eine untere Grenze eines Kompatibilitätsbandes 33 bezeichnet. Dabei beschreibt die obere Grenze 31 den Verlauf für einen Zug 1 im beladenen Zustand bei einer minimalen theoretischen Masse der Arbeitsmaschine 2. Die untere Grenze 32 beschreibt den Verlauf für einen Zug 1 im beladenen Zustand bei einer maximalen theoretischen Masse der Arbeitsmaschine 2. Weiterhin ist das Kompatibilitätsbandes 30 dargestellt. Das tatsächliche Bremsverhalten wird dabei von der tatsächlichen Masse der landwirtschaftlichen Arbeitsmaschine 2 beeinflusst, welche bei der Festlegung des Kompatibilitätsbandes 30 unberücksichtigt bleibt.

In Fig. 5 ist mit Bezugszeichen 34 ein charakteristischer Verlauf der relativen Verzögerung a_{zr} des Zuges 1 dargestellt, der sich bei der Aktivierung des Bremssystems einstellt. Beispielhaft wird bei der Aktivierung des Bremssystems von einem pneumatischen Steuerdruck pₚ von 4,5 bar ausgegangen. Dabei würde sich eine Soll-Verzögerung a_{rSoll} von etwa 40 % einstellen. Unter Berücksichtigung der tatsächlichen Masse des Arbeitsfahrzeugs 2, welche in dem Verlauf 34 berücksichtigt ist, wird gemäß dem Verlauf 34 durch das Auftreten eines Schubbetriebs eine Ist-Verzögerung a_{rIst} erreicht, die geringer als die Soll-Verzögerung a_{rSoll} ist. Der Schubbetrieb resultiert daraus, dass die Bremskraft der Arbeitsmaschine 2 größer als die des Arbeitsgerätes ist, so dass sich der Arbeitspunkt des Bremssystems außerhalb des Bereiches 41 gemäß Fig. 3 liegt. Eine Abweichung 35 zwischen der Soll-Verzögerung a_{rSoll} und Ist-Verzögerung a_{rIst} wird durch eine Anpassung, im gezeigten Fall durch eine Erhöhung, des Steuerdrucks pₚ zur Ansteuerung der Bremsvorrichtung 15 des Arbeitsgeräts 3 ausgeglichen. Die Anpassung des Steuerdrucks pₚ erfolgt dabei vorzugsweise iterativ. Zur Bestimmung der Soll-Verzögerung a_{rSoll} können Kennlinien in der Steuer- und Regelvorrichtung 18 hinterlegt sein.

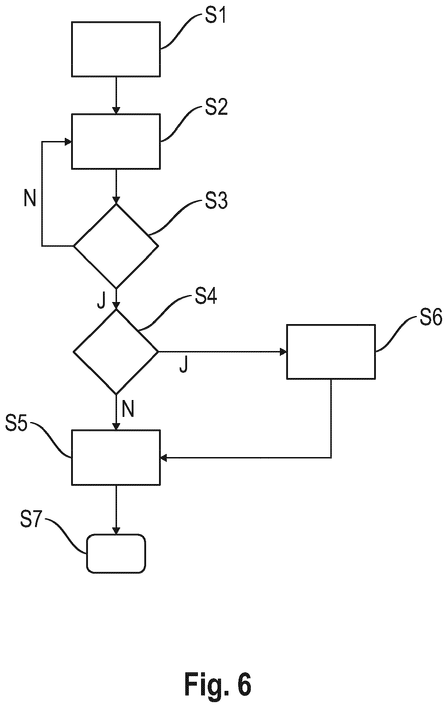

In Fig. 6 ist ein vereinfachtes Flussdiagramm zur Veranschaulichung des Verfahrens zum Betreiben des Bremssystems des Zuges 1 dargestellt. Im Schritt S1 wird die Aktivierung des Bremssystems detektiert. Die Aktivierung kann beispielsweise anhand der Betätigung des Bremspedals 16 durch den Sensor 20 festgestellt werden.

Im Schritt S2 werden die Soll-Verzögerung a_{rSoll} und die Ist-Verzögerung a_{rIst} bestimmt. Hierzu wird die Soll-Verzögerung a_{rSoll} mittels der in der Steuer- und Regelvorrichtung 18 hinterlegten Kennlinien bestimmt. Für die Bestimmung der Ist-Verzögerung a_{rIst} kann der von der Bremsvorrichtung 12 der Arbeitsmaschine 2 erzeugte hydraulische Bremsdruck pₕ durch den Drucksensor 21 erfasst werden. Der Drucksensor 21 übermittelt die Signale an die Steuer- und Regelvorrichtung 18, welche die Signale des Sensors 21 auswertet, um die Ist-Verzögerung a_{rIst} daraus zu bestimmen.

Alternativ oder zusätzlich kann zur Bestimmung der von der Bremsvorrichtung 12 erzeugten Bremskraft die Pedalstellung des Bremspedals 16 oder eine auf das Bremspedal 16 ausgeübte Betätigungskraft durch den Sensor 20 erfasst werden.

Weiterhin kann die Ist-Verzögerung a_{rIst} in Abhängigkeit vom Verlauf der Fahrgeschwindigkeit während des Bremsvorgangs durch die Steuer- und Regelvorrichtung 18 bestimmt werden.

Ebenfalls denkbar ist, dass die Ist-Verzögerung a_{rIst} anhand einer durch die Auswertung von Positionsortungssignalen, die von dem Positionsortungssensor 25 bereitgestellt werden, bestimmten Beschleunigung während des Bremsvorganges bestimmt wird und/oder mittels des zumindest einen an der Arbeitsmaschine 2 angeordneten Beschleunigungssensors 22.

Insbesondere kann die Ist-Verzögerung a_{rIst} anhand von während des Bremsvorganges auftretenden Kräften an der die Arbeitsmaschine 2 und das Arbeitsgerät 3 verbindenden Kupplungsvorrichtung 13 bestimmt werden, die durch den Kraftaufnehmers 26 erfassbar sind. Entsprechend dem Verzögerungsverhalten des zumindest einen Arbeitsgeräts 3 nach der Aktivierung des Bremssystems treten an der Kupplungsvorrichtung 13 Zug- oder Druckkräfte auf, die durch den Kraftaufnehmer 26 erfasst und an die Steuer- und Regelvorrichtung 18 zur Auswertung übertragen werden.

Weiterhin kann die Ist-Verzögerung durch einen Vergleich von Eingangsdrehzahl und Ausgangsdrehzahl des Getriebes 9 bestimmt werden, die an der Eingangswelle 8 bzw. der Ausgangswelle 10 sensorisch erfasst werden.

Die aufgeführten Möglichkeiten zur Bestimmung der Ist-Verzögerung a_{rIst} ist nicht abschließend zu verstehen. Zudem können die Verfahren zur Bestimmung der Ist-Verzögerung a_{rIst} miteinander kombiniert werden, um eine höhere Genauigkeit zu erreichen.

Im nachfolgenden Schritt S3 wird die Ist-Verzögerung a_{rIst} mit der der erzeugten Bremskraft entsprechenden theoretischen Soll-Verzögerung a_{rSoll} des Zuges 1 verglichen. Ist die Abweichung 35 zwischen der Ist-Verzögerung a_{rIst} und der Soll-Verzögerung a_{rSoll} gleich oder größer Null, so wird zum Schritt S2 zurückgegangen. Ist die Abweichung 35 zwischen der Ist-Verzögerung a_{rIst} und der Soll-Verzögerung a_{rSoll} kleiner Null, d.h. liegt ein Schubbetrieb vor, so wird zum Schritt S4 übergegangen.

Im Schritt S4 wird die Abweichung 35 zwischen der Ist-Verzögerung a_{rIst} und der Soll-Verzögerung a_{rSoll} mit einem in der Steuer- und Regelvorrichtung 18 hinterlegten, vorgebbaren Grenzwert verglichen. Wird keine Überschreitung des vorgebbaren Grenzwertes der Abweichung 35 festgestellt, so wird zum Schritt S5 übergegangen.

Bei einem Überschreiten des vorgebbaren Grenzwertes der Abweichung 35 wird zum Schritt S6 verzweigt, in welchem ein Hinweissignal von der Steuer- und Regelvorrichtung 18 generiert wird. Das Überschreiten des vorgebbaren Grenzwertes der Abweichung 35 zwischen der Soll-Verzögerung a_{rSoll} und der Ist-Verzögerung a_{rIst} kann als Indiz für eine Überladung des Zuges 1 oder den Verschleiß an zumindest einer der Bremsvorrichtungen 12, 15 des Zuges 1 gewertet und entsprechend signalisiert werden. Nach der Generierung des Hinweissignals im Schritt S6 wird zum Schritt S5 übergegangen.

Im Schritt S5 erfolgt die Anpassung der von der Bremsvorrichtung 15 des mindestens einen Arbeitsgeräts 3 erzeugten Bremskraft, um die Abweichung 35 auszugleichen. Hierzu wird der Steuerdruck pp der Bremsvorrichtung 15 des Arbeitsgerätes 3 angepasst. Die Anpassung im Schritt S5 wird vorzugsweise iterativ durchgeführt, bis die Abweichung 35 zwischen der Soll-Verzögerung a_{rSoll} und der Ist-Verzögerung a_{rIst} im Wesentlichen ausgeglichen ist.

Im Schritt S7 endet das Verfahren, wenn der Bremsvorgang abgeschlossen wurde bzw. unterbrochen wird.

**Bezugszeichenliste**

| | | | |
|---|---|---|---|
| 1 | Landwirtschaftlicher Zug | 31 | Bremsdruckkennlinie |
| 2 | Arbeitsmaschine | 32 | Obere Grenze |
| 3 | Arbeitsgerät | 33 | Untere Grenze |
| 4 | Vorderachse | 34 | Verlauf |
| 5 | Hinterachse | 35 | Abweichung |
| 6 | Bodeneingriffsmittel | 40 | Kompatibilitätsband |
| 7 | Antriebsmotor | 41 | Bereich |
| 8 | Eingangswelle | 42 | Obere Grenze |
| 9 | Getriebe | 43 | Untere Grenze |
| 10 | Ausgangswelle | 44 | Arbeitspunkt |
| 11 | Differential | 44' | Arbeitspunkt |
| 12 | Bremsvorrichtung | 45 | Arbeitspunkt |
| 13 | Kupplungsvorrichtung | 45' | Arbeitspunkt |
| 14 | Bodeneingriffsmittel | | |
| 15 | Bremsvorrichtung | aᵣ | Relative Verzögerung |
| 16 | Bremspedal | a_{rz} | Relative Verzögerung von 1 |
| 17 | Kommunikationsverbindung | a_{rIst} | Ist-Verzögerung |
| 18 | Steuer- und Regelvorrichtung | a_{rSoll} | Soll-Verzögerung |
| 19 | Steuerleitung | pₕ | Hydraulischer Bremsdruck |
| 20 | Sensor | pₚ | Pneumatischer Steuerdruck |
| 21 | Drucksensor | | |
| 22 | Beschleunigungssensor | S1 bis S7 | Schritt |
| 23 | Drehzahlsensor | | |
| 24 | Drehzahlsensor | | |
| 25 | Positionsortungssensor | | |
| 26 | Kraftaufnehmer | | |
| 27 | Verlauf | | |
| 28 | Obere Grenze | | |
| 29 | Untere Grenze | | |
| 30 | Kompatibilitätsband | | |

## Patentansprüche

1. Verfahren zum Betreiben eines Bremssystems eines landwirtschaftlichen Zuges (1), der eine landwirtschaftliche Arbeitsmaschine (2) sowie zumindest ein von dieser gezogenes Arbeitsgerät (3) umfasst, wobei die Arbeitsmaschine (2) und das zumindest eine Arbeitsgerät (3) jeweils zumindest ein Bodeneingriffsmittel (6, 14) umfassen, durch welche eine von jeweils einer Bremsvorrichtung (12, 15) der Arbeitsmaschine (2) und des zumindest einen Arbeitsgeräts (3) erzeugte Bremskraft übertragen wird, **dadurch gekennzeichnet, dass** bei einer Aktivierung (S1) des Bremssystems des Zuges (1) eine Ist-Verzögerung (a_{rIst}) der Arbeitsmaschine (2) in Abhängigkeit von einer durch die Bremsvorrichtung (12) der Arbeitsmaschine (2) erzeugten Bremskraft bestimmt wird(S2), die Ist-Verzögerung (a_{rIst}) mit einer der durch die Bremsvorrichtung der Arbeitsmaschine erzeugten Bremskraft entsprechenden theoretischen Soll-Verzögerung (a_{rSoll}) der Arbeitsmaschine (2) verglichen wird(S3), und eine Abweichung (35) zwischen der Soll-Verzögerung (a_{rSoll}) und der Ist-Verzögerung der Arbeitsmaschine (a_{rSol}) durch eine Anpassung der von der Bremsvorrichtung (15) des mindestens einen Arbeitsgeräts (3) erzeugten Bremskraft ausgeglichen wird (S5).

2. Verfahren nach Anspruch 1, **dadurch gekennzeichnet, dass** die Anpassung der von der Bremsvorrichtung (15) des mindestens einen Arbeitsgeräts (3) erzeugten Bremskraft iterativ durchgeführt wird.

3. Verfahren nach Anspruch 1 oder 2, **dadurch gekennzeichnet, dass** zur Bestimmung der erzeugten Bremskraft ein von der Bremsvorrichtung (12) der Arbeitsmaschine (2) erzeugter Bremsdruck sensorisch erfasst wird.

4. Verfahren nach Anspruch 1 bis 3, **dadurch gekennzeichnet, dass** zur Bestimmung der erzeugten Bremskraft eine Pedalstellung eines Bremspedals (16) der Bremsvorrichtung (12) der Arbeitsmaschine (2) sensorisch erfasst wird.

5. Verfahren nach einem der Ansprüche 1 bis 4, **dadurch gekennzeichnet, dass** die Ist-Verzögerung (a_{rIst}) in Abhängigkeit vom Verlauf der Fahrgeschwindigkeit während des Bremsvorgangs bestimmt wird.

6. Verfahren nach einem der vorangehenden Ansprüche, **dadurch gekennzeichnet, dass** die Ist-Verzögerung (a_{rIst}) anhand einer durch die Auswertung von Positionsortungssignalen bestimmten Beschleunigung während des Bremsvorganges bestimmt wird.

7. Verfahren nach einem der vorangehenden Ansprüche, **dadurch gekennzeichnet, dass** die Ist-Verzögerung (a_{rIst}) während des Bremsvorganges mittels zumindest eines an der Arbeitsmaschine (2) angeordneten Beschleunigungssensors (22) bestimmt wird.

8. Verfahren nach einem der vorangehenden Ansprüche, **dadurch gekennzeichnet, dass** die Ist-Verzögerung (a_{rIst}) anhand von während des Bremsvorganges auftretenden Kräften an einer die Arbeitsmaschine (2) und das Arbeitsgerät (3) verbindenden Kupplungsvorrichtung (13) bestimmt wird.

9. Verfahren nach einem der vorangehenden Ansprüche, **dadurch gekennzeichnet, dass** die Ist-Verzögerung durch einen Vergleich von Eingangsdrehzahl und Ausgangsdrehzahl eines Getriebes (2) der Arbeitsmaschine (2) bestimmt wird.

10. Verfahren nach einem der vorangehenden Ansprüche, **dadurch gekennzeichnet, dass** bei einem Überschreiten eines vorgebbaren Grenzwertes für die Abweichung (35) zwischen der Soll-Verzögerung (a_{rSoll}) und der Ist-Verzögerung (a_{rIst}) ein Hinweissignal generiert wird.

11. Bremssystem eines landwirtschaftlichen Zuges (1), der eine landwirtschaftliche Arbeitsmaschine (2) sowie zumindest ein von der Arbeitsmaschine (2) gezogenes Arbeitsgerät (3) umfasst, wobei die Arbeitsmaschine (2) und das zumindest eine Arbeitsgerät (3) jeweils zumindest ein Bodeneingriffsmittel (6, 14) umfassen, durch welche eine von jeweils zumindest einer Bremsvorrichtung (12, 15) der Arbeitsmaschine (2) und des zumindest einen Arbeitsgeräts (3) erzeugte Bremskraft übertragen wird, **dadurch gekennzeichnet, dass** dem Bremssystem eine Steuer- und Regelvorrichtung (18) zugeordnet ist, welche dazu eingerichtet ist, bei einer Aktivierung des Bremssystems des Zuges (1) in Abhängigkeit von einer durch die Bremsvorrichtung (12) der Arbeitsmaschine (2) erzeugten Bremskraft eine Ist-Verzögerung (a_{rIst}) der Arbeitsmaschine (2) zu bestimmen, die bestimmte Ist-Verzögerung (a_{rIst}) mit einer der von der Bremsvorrichtung der Arbeitsmaschine erzeugten Bremskraft entsprechenden Soll-Verzögerung (a_{rSoll}) der Arbeitsmaschine (2) zu vergleichen, und eine Abweichung zwischen der Soll-Verzögerung (a_{rSoll}) und der Ist-Verzögerung (a_{rIst}) der Arbeitsmaschine (2) durch eine Anpassung der von der Bremsvorrichtung (15) des mindestens einen Arbeitsgeräts (3) erzeugten Bremskraft auszugleichen.

12. Bremssystem nach Anspruch 11, **dadurch gekennzeichnet, dass** die Bremsvorrichtung (12) der Arbeitsmaschine (2) hydraulisch und die Bremsvorrichtung (15) des zumindest einen Arbeitsgeräts (3) hydraulisch oder pneumatisch arbeitet.

13. Landwirtschaftlicher Zug (1), der eine landwirtschaftliche Arbeitsmaschine (2) sowie zumindest ein von der Arbeitsmaschine (2) gezogenes Arbeitsgerät (3) umfasst, **dadurch gekennzeichnet, dass** der Zug (1) ein Bremssystem nach Anspruch 11 oder 12 aufweist.

14. Landwirtschaftlicher Zug (1) nach Anspruch 13, **dadurch gekennzeichnet, dass** der Zug eine Steuer- und Regelvorrichtung (18) sowie zumindest einen Sensor (20, 21, 22, 23, 24, 25, 26) umfasst, wobei die Steuer- und Regelvorrichtung (18) zur Auswertung der Signale des zumindest einen Sensors (20, 21, 22, 23, 24, 25, 26) eingerichtet ist, um das Bremssystem des Zuges (1) nach einem der Ansprüche 2 bis 10 zu betreiben.

## Claims

1. A method for operating a braking system of an agricultural vehicle-trailer combination (1) which comprises an agricultural working machine (2) as well as at least one working implement (3) which is drawn thereby, wherein the working machine (2) and the at least one working implement (3) respectively comprise at least one ground engaging means (6, 14) through which a braking force produced by a respective braking device (12, 15) of the working machine (2) and of the at least one working implement (3) is transmitted, **characterized in that** when the braking system of the vehicle-trailer combination (1) is activated (S1), an actual deceleration (a_{rIst}) of the working machine (2) is determined (S2) as a function of a braking force produced by the braking device (12) of the working machine (2),
the actual deceleration (a_{rIst}) is compared (S3) with a theoretical nominal deceleration (a_{rSoll)} of the working machine (2) corresponding to the braking force produced by the braking device of the working machine,
and a difference (35) between the nominal deceleration (a_{rSoll}) and the actual deceleration of the working machine (a_{rSol}) is compensated for (S5) by adjusting the braking force produced by the braking device (15) of the at least one working implement (3).

2. The method according to claim 1, **characterized in that** the adjustment of the braking force produced by the braking device (15) of the at least one working implement (3) is carried out iteratively.

3. The method according to claim 1 or claim 2, **characterized in that** in order to determine the braking force produced, a braking pressure produced by the braking device (12) of the working machine (2) is detected by means of a sensor.

4. The method according to claims 1 to 3, **characterized in that** in order to determine the braking force which is produced, a pedal position of a brake pedal (16) of the braking device (12) of the working machine (2) is detected by means of a sensor.

5. The method according to one of claims 1 to 4, **characterized in that** the actual deceleration (a_{rIst}) is determined as a function of the profile of the drive speed during the braking procedure.

6. The method according to one of the preceding claims, **characterized in that** the actual deceleration (a_{rIst}) is determined with the aid of an acceleration determined by evaluating positioning signals during the braking procedure.

7. The method according to one of the preceding claims, **characterized in that** the actual deceleration (a_{rIst}) during the braking procedure is determined by means of at least one acceleration sensor (22) disposed on the working machine (2).

8. The method according to one of the preceding claims, **characterized in that** the actual deceleration (a_{rIst}) is determined with the aid of forces generated during the braking procedure at a coupling device (13) which connects the working machine (2) and the working implement (3).

9. The method according to one of the preceding claims, **characterized in that** the actual deceleration is determined by means of a comparison of the input rotational speed and the output rotational speed of a transmission (2) of the working machine (2).

10. The method according to one of the preceding claims, **characterized in that** in the case in which a specifiable limit for the difference (35) between the nominal deceleration (a_{rSoll)} and the actual deceleration (a_{rIst}) is exceeded, a warning signal is generated.

11. A braking system for an agricultural vehicle-trailer combination (1) which comprises an agricultural working machine (2) as well as at least one working implement (3) which is drawn by the working machine (2), wherein the working machine (2) and the at least one working implement (3) respectively comprise at least one ground engaging means (6, 14) through which a braking force produced by a respective at least one braking device (12, 15) of the working machine (2) and of the at least one working implement (3) is transmitted, **characterized in that** a controlling and regulating device (18) is associated with the braking system which is configured, when the braking system of the vehicle-trailer combination (1) is activated, to determine an actual deceleration (a_{rIst}) of the working machine (2) as a function of a braking force produced by the braking device (12) of the working machine (2), to compare the determined actual deceleration (a_{rIst}) with a nominal deceleration (a_{rSoll)} of the working machine (2) corresponding to the braking force produced by the braking device of the working machine, and to compensate for a difference between the nominal deceleration (a_{rSoll)} and the actual deceleration (a_{rIst}) of the working machine (2) by adjusting the braking force produced by the braking device (15) of the at least one working implement (3).

12. The braking system according to claim 11, **characterized in that** the braking device (12) of the working machine (2) operates hydraulically and the braking device (15) of the at least one working implement (3) operates hydraulically or pneumatically.

13. An agricultural vehicle-trailer combination (1) which comprises an agricultural working machine (2) as well as at least one working implement (3) which is drawn by the working machine (2), **characterized in that** the vehicle-trailer combination (1) has a braking system according to claim 11 or claim 12.

14. The agricultural vehicle-trailer combination (1) according to claim 13, **characterized in that** the vehicle-trailer combination comprises a controlling and regulating device (18) as well as at least one sensor (20, 21, 22, 23, 24, 25, 26), wherein the controlling and regulating device (18) is configured to evaluate the signals from the at least one sensor (20, 21, 22, 23, 24, 25, 26) in order to operate the braking system of the vehicle-trailer combination (1) in accordance with one of claims 2 to 10.

## Revendications

1. Procédé de fonctionnement d'un système de freinage d'un attelage agricole (1) qui inclut une machine de travail agricole (2) ainsi qu'au moins un outil de travail (3) tiré par celle-ci, la machine de travail (2) et le au moins un outil de travail (3) incluant respectivement au moins un moyen de prise au sol (6, 14) par l'intermédiaire desquels est transmise une force de freinage générée par respectivement un dispositif de freinage (12, 15) de la machine de travail (2) et du au moins un outil de travail (3), **caractérisé en ce que,** en cas d'activation (S1) du système de freinage de l'attelage (1), un ralentissement effectif (a_{rIst}) de la machine de travail (2) est déterminé (S2) en fonction d'une force de freinage générée par l'intermédiaire du dispositif de freinage (12) de la machine de travail (2), le ralentissement effectif (a_{rIst}) est comparé (S3) à un ralentissement théorique de consigne (a_{rSoll}) de la machine de travail (2) correspondant à la force de freinage générée par l'intermédiaire du dispositif de freinage de la machine de travail, et un écart (35) entre le ralentissement de consigne (a_{rSoll}) et le ralentissement effectif de la machine de travail (a_{rIst}) est compensé (S5) par l'intermédiaire d'une adaptation de la force de freinage générée par le dispositif de freinage (15) du au moins un outil de travail (3).

2. Procédé selon la revendication 1, **caractérisé en ce que** l'adaptation de la force de freinage générée par le dispositif de freinage (15) du au moins un outil de travail (3) est effectuée de manière itérative.

3. Procédé selon la revendication 1 ou 2, **caractérisé en ce que**, pour déterminer la force de freinage générée, une pression de freinage générée par le dispositif de freinage (12) de la machine de travail (2) est détectée au moyen de capteurs.

4. Procédé selon la revendication 1 à 3, **caractérisé en ce que**, pour déterminer la force de freinage générée, une position de pédale d'une pédale de frein (16) du dispositif de freinage (12) de la machine de travail (2) est détectée au moyen de capteurs.

5. Procédé selon une des revendications 1 à 4, **caractérisé en ce que** le ralentissement effectif (a_{rIst}) est déterminé en fonction de la variation de la vitesse de marche pendant l'opération de freinage.

6. Procédé selon une des revendications précédentes, **caractérisé en ce que** le ralentissement effectif (a_{rIst}) est déterminé à l'aide d'une accélération déterminée par l'intermédiaire de l'analyse de signaux de localisation de position pendant l'opération de freinage.

7. Procédé selon une des revendications précédentes, **caractérisé en ce que** le ralentissement effectif (a_{rIst}) est déterminé pendant l'opération de freinage au moyen d'au moins un capteur d'accélération (22) disposé sur la machine de travail (2).

8. Procédé selon une des revendications précédentes, **caractérisé en ce que** le ralentissement effectif (a_{rIst}) est déterminé à l'aide de forces survenant pendant l'opération de freinage au niveau d'un dispositif de couplage (13) reliant la machine de travail (2) et l'outil de travail (3).

9. Procédé selon une des revendications précédentes, **caractérisé en ce que** le ralentissement effectif est déterminé par l'intermédiaire d'une comparaison de la vitesse de rotation d'entrée et de la vitesse de rotation de sortie d'une transmission (2) de la machine de travail (2).

10. Procédé selon une des revendications précédentes, **caractérisé en ce qu'**en cas de surpassement d'une valeur limite prescriptible pour l'écart (35) entre le ralentissement de consigne (a_{rSoll}) et le ralentissement effectif (a_{rIst}), un signal d'avertissement est généré.

11. Système de freinage d'un attelage agricole (1) qui inclut une machine de travail agricole (2) ainsi qu'au moins un outil de travail (3) tiré par la machine de travail (2), la machine de travail (2) et le au moins un outil de travail (3) incluant respectivement au moins un moyen de prise au sol (6, 14) par l'intermédiaire desquels est transmise une force de freinage générée par respectivement au moins un dispositif de freinage (12, 15) de la machine de travail (2) et du au moins un outil de travail (3), **caractérisé en ce qu'**au système de freinage est associé un dispositif de commande et de régulation (18) qui est agencé pour déterminer, en cas d'activation du système de freinage de l'attelage (1), un ralentissement effectif (a_{rIst}) de la machine de travail (2) en fonction d'une force de freinage générée par l'intermédiaire du dispositif de freinage (12) de la machine de travail (2), le ralentissement effectif (a_{rIst}) est comparé à un ralentissement théorique de consigne (a_{rSoll}) de la machine de travail (2) correspondant à la force de freinage générée par l'intermédiaire du dispositif de freinage de la machine de travail, et un écart entre le ralentissement de consigne (a_{rSoll}) et le ralentissement effectif (a_{rIst}) de la machine de travail (2) est compensé par l'intermédiaire d'une adaptation de la force de freinage générée par le dispositif de freinage (15) du au moins un outil de travail (3).

12. Système de freinage selon la revendication 11, **caractérisé en ce que** le dispositif de freinage (12) de la machine de travail (2) fonctionne hydrauliquement et le dispositif de freinage (15) du au moins un outil de travail (3) fonctionne hydrauliquement ou pneumatiquement.

13. Attelage agricole (1) qui inclut une machine de travail agricole (2) ainsi qu'au moins un outil de travail (3) tiré par la machine de travail (2), **caractérisé en ce que** l'attelage (1) comporte un système de freinage selon la revendication 11 ou 12.

14. Attelage agricole (1) selon la revendication 13, **caractérisé en ce que** l'attelage inclut un dispositif de commande et de régulation (18) ainsi qu'au moins un capteur (20, 21, 22, 23, 24, 25, 26), le dispositif de commande et de régulation (18) étant agencé pour analyser les signaux du au moins un capteur (20, 21, 22, 23, 24, 25, 26) afin de faire fonctionner le système de freinage de l'attelage (1) selon une des revendications 2 à 10.
